# EUROPEAN PATENT APPLICATION

(11) **EP 4 512 599 A1**
(43) Date of publication of application: **26.02.2025**
(21) Application number: 24194065.9
(22) Date of filing: 12.08.2024
(51) Int. Cl.: B29C 45/73, B29B 17/00, B29C 33/02, B29K 23/00, B29K 67/00, B29K 105/26, B29C 45/18, B29C 45/47

(54) **PROCESS FOR PRODUCING AN ARTICLE MADE OF A THERMOPLASTIC POLYMER**

(30) Priority: 22.08.2023 LU 504972
(71) Applicant: Paltech, Clara , Co. Offaly R35 XR57 (IE)
(72) Inventor: FEERICK, Patrick, Co. Offaly (IE); DOYLE, Adrian, Co. Offaly (IE)
(74) Representative: Connor, Marco Tom

(57) **Abstract**

The invention relates to process for producing an article (11) made of a thermoplastic polymer, comprising,
• providing,
∘ a thermoplastic polymer in the form of discrete solid particles (12p),
∘ a mould (1) comprising a mould cavity (1c) defined by walls,
∘ an extruding apparatus (3),

• fluidly coupling the extruding apparatus (3) to the mould cavity (3c
• feeding the solid particles (12p) into the extruding apparatus (3), where they are melted to form a thermoplastic melt (12m),
• filling the mould cavity (1c) with the thermoplastic melt (12m) fed out of the extruding apparatus (3),
• allowing the thermoplastic melt (12m) to cool in the cavity to form the article (11),
• extracting the article (11) from the mould (1),
wherein the mould (1) is not actively heated during filling of the mould cavity (1c) and wherein the walls defining the mould cavity comprise a thermal insulating layer (1i) configured for slowing a cooling rate of the thermoplastic melt (12m).

The invention further relates to an apparatus for producing an article (11) made with this process, whereby the mould (1) and the coupling duct (3d) do not comprise any heating element configured for heating the mould and coupling duct (3d). The mould cavity (1c) and the coupling duct (3d) are furthermore lined with a thermal insulating layer (1i) configured for slowing a cooling rate of the thermoplastic melt (12m).

## Description

### FIELD OF THE INVENTION

The invention relates to the field of manufacturing articles made of thermoplastic polymers, preferably made of recycled thermoplastic polymers. In general terms it concerns a low pressure extrusion-moulding process using an extruding apparatus to cast thermoplastic polymer melt, preferably comprising waste material, into a mould cavity. The process can also be referred to as. Because of a special design of the mould, the walls of the mould cavity are not heated during the casting process, thus reducing the production costs of articles which can be of large dimensions. Because the polymer melt is cast into the mould at low pressure, the cost of the mould is also reduced accordingly.

### BACKGROUND OF THE INVENTION

Although essential to human activity, polymers are under scrutiny because of their fossil, non-renewable origins. Furthermore, waste of polymer origins has become a concern in many countries, and in the oceans. Recycling waste polymers clearly is one key solution to keep the advantages of polymers, without the inconveniences of their non-renewable origins and of the waste they generate. The present invention concerns using waste thermoplastic materials to form new articles, preferably of large dimensions at reduced production costs, involving limited pretreatment of the waste material prior to casting it into a mould.

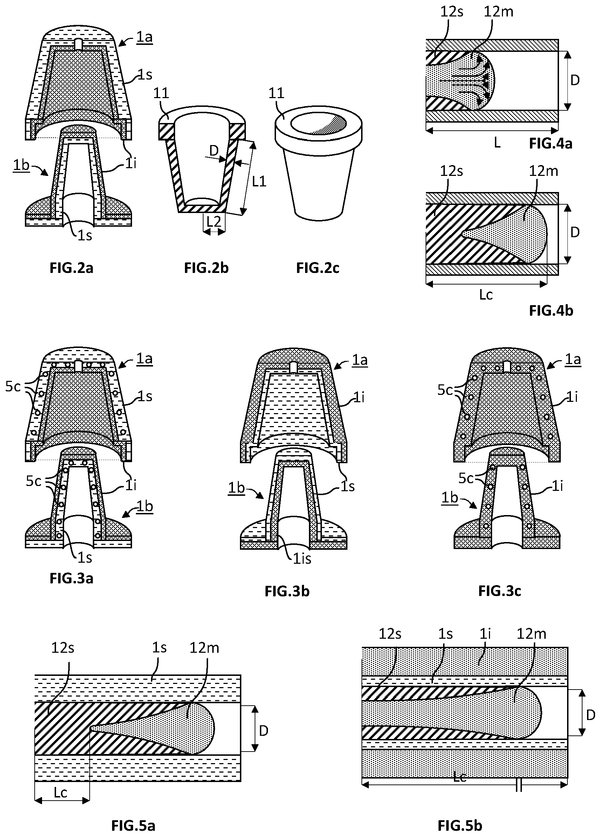

If the article to be produced comprises walls with a large length to thickness ratio, the process requires either the mould must be heated, or the pressure to be high, to increase the flow rate and prevent solidified polymer to obstruct the passage, as shown in Figures 4b and 5a.

Neat shape articles made of thermoplastic materials are often produced by injection moulding. Injection moulding is a process wherein solid thermoplastic pellets are fed to a heated screw that melts the pellets and transports them to a volume ahead of the screw. When enough molten material is present in the volume, the screw is moved forwards, ramming the molten material out of the screw chamber into a mould cavity at high pressure. The mould must be very resistant to support the high pressures of injection. The mould is generally cooled to increase process speed. The dimensions of the articles produced by injection moulding are limited *inter alia* by the dimensions of the volume ahead of the screw and by the pressure which must be built up. Injection moulding is a rather expensive process suitable for high production volumes.

Because waste thermoplastic polymer is abundantly available and is very cheap, it is suitable for producing articles of large dimensions, such as road barriers, urban furniture, containers, and the like. A more cost effective process than injection moulding is desirable.

US7208219 describes a process of extrusion-compression moulding, wherein a mould half-cavity is filled with a thermoplastic melt cast from an extruder. When filled, the mould half-cavity is moved to a compression moulding station wherein a complementary half-shell is driven down into the mould half-cavity to apply pressure to the thermoplastic melt. The moulds used in this process must therefore be made of metal to withstand the pressure of compression moulding.

US2022/0250300A1 and WO2021/159122 both describe a low pressure extruding-moulding process, wherein a molten thermoplastic is injected into a mould from an extruder. The pressure in the mould is not more than 41 MPa (= 6000 psi), which is quite a high value; requiring strong metal moulds.

CA2684355 describes a process wherein a thermoplastic material is extruded with a blowing agent and cut into individual preforms. Each individual preform is placed into a heated mould cavity and allowing the blowing agent to expand to build up pressure for the molten polymer to fill the cavity. A porous article is obtained, such as a stopper for a drinking bottle. This technique cannot be used for manufacturing non-porous articles.

CN 111633917 describes a integrated apparatus for forming articles made of polymer waste, comprising a crushing and filtering unit for pretreating the polymer waste, and an extrusion unit for filling a mould cavity.

DE202012100504, DE202006004632, FR3020304, and EP2476535 describe moulds for injection moulding articles provided with insulating layers lining the walls thereof. Injection moulding injects polymer melts into a mould cavity at very high pressure and the flow and thermal behaviour of a polymer melt being injection moulded cannot be compared with the flow and thermal behaviour of the same polymer melt being poured into a cavity with very low to no other pressure than gravity.

There remains a need for a cost-effective manufacturing process for producing articles made of thermoplastic polymers, preferably of large dimensions, with low cost moulds, requiring moderate to little mechanical resistance.

The present invention proposes a process for producing an article made of a thermoplastic polymer proceeding a low pressure and with no active heating of the mould. These and other advantages of the present invention are described in more details in the following sections.

### SUMMARY OF THE INVENTION

The present invention concerns a process for producing an article made of a thermoplastic polymer, comprising first providing,
- a thermoplastic polymer in the form of discrete solid particles,
- a mould comprising a mould cavity defined by walls,
- an extruding apparatus,

Then, fluidly coupling an extruding outlet of the extruding apparatus to the mould cavity through a coupling duct, The solid particles of thermoplastic polymer is fed into the extruding apparatus, where they are melted to form a thermoplastic melt and is transported along a screw of the extruding apparatus to the extruding outlet,

The mould cavity (1c) is filled with the thermoplastic melt fed out of the extruding outlet, and the thermoplastic melt is allowed to cool in the cavity to form the article, The article can then be extracted from the mould,

The gist of the present invention is that the mould is not actively heated during filling of the mould cavity and that the walls defining the mould cavity comprise a thermal insulating layer configured for slowing a cooling rate of the thermoplastic melt during the filling of the mould cavity.

After filling the mould cavity with the thermoplastic melt the mould with the mould cavity filled with thermoplastic melt can be uncoupled from the coupling duct to allow the thermoplastic melt to cool in the cavity to form the article. A new mould with a mould cavity can then be coupled to the coupling duct and the remaining steps of the process can be repeated.

The thermoplastic polymer in the form of discrete solid particles can comprise at least 50 wt.%, preferably at least 90 wt.%, more preferably 100 wt.% of thermoplastic polymer waste (12w). In a preferred embodiment, the thermoplastic polymer waste comprises a first fraction of at least 70 wt.%, preferably at least 90 wt.% is formed of a major polymer selected out of a list of three polymers consisting of polypropylene (PP), polyethylene (PE), or polyethylene terephthalate (PET) and comprises a second fraction, complementary with the first fraction, containing one or two polymers selected out of the list of three polymers, other than the major polymer.

In a preferred embodiment, the thermoplastic polymer waste is pretreated prior to feeding to the extruding apparatus. This can be achieved by running the recycled polymer waste in a pretreatment extruder configured for carrying out at least one of degassing the thermoplastic polymer waste (12w), blending the thermoplastic polymer waste (12w) with other thermoplastic polymer waste (12w) or with a colorant (14) or a dye, and / or removing solid inclusions from the thermoplastic polymer waste (12w). The thus pretreated thermoplastic polymer waste can be extruded out of the pretreatment extruder and chopped to form the discrete solid particles or it can be fed directly into the extruding apparatus as a thermoplastic melt.

The coupling duct is preferably not actively heated during filling of the mould cavity. The coupling duct preferably comprises an insulating layer configured for slowing a cooling rate of the thermoplastic melt as the thermoplastic melt flows through the coupling duct.

In an embodiment, the walls of the mould cavity comprise a structural shell providing mechanical resistance to the mould and wherein the thermal insulating layer is applied on a surface of the shell. In an alternative embodiment, the walls of the mould cavity are made of a polymer material, preferably a fibre reinforced composite material, which forms the insulating layer.

The thermal insulating layer can have a thermal conductivity (k) of not more than 1 W / (m K), preferably not more than 0.8 W / (m K), more preferably not more than 0.5 W / (m K). For higher values of the thermal conductivity, the layer is not considered herein as being an insulating layer. The insulating layer is preferably formed of a material selected among,
- a thermosetting resin, preferably selected among epoxy, polyester, polyurethane, or
- a thermoplastic polymer of melting temperature at least 80°C higher than a temperature of the thermoplastic melt (12m) at the extruding outlet, or
- a fibre reinforce composite with a thermoplastic or thermoset matrix as defined supra, or
- a cementitious material, a clay-based material, gypsum.

The thermal insulating layer can have an average thickness comprised between 2 mm and 100 mm, preferably between 5 and 50 mm, more preferably between 10 and 20 mm.

Contrary to injection moulding, no additional pressure other than gravity and a pressure applied by a rotation of the screw of the extruding apparatus is applied in the process of the present invention during the filling of the cavity with the thermoplastic melt.

Cooling of the thermoplastic melt in the cavity can be accelerated with a cooling fluid, including cool air blown with a blower onto surfaces of the mould or with a cooling liquid circulating in cooling channels arranged in or around the mould.

The process of the present invention is suitable for producing articles of large dimensions. For example, the article made of a thermoplastic polymer can weigh at least 3 kg, preferably at least 10kg, more preferably more than 100 kg; or more than 250 kg.

The present invention also concerns an apparatus for producing an article made of a thermoplastic polymer, with a process as defined supra. The apparatus comprises a mould and an extruding apparatus. The mould comprises walls defining a mould cavity, The extruding apparatus comprises an inlet for introducing the thermoplastic polymer into a chamber provided with heating elements and containing at least one rotating screw configured for conveying molten polymer from the inlet to an extruding outlet. The extruding apparatus is in fluid communication with the mould cavity,

The gist of the invention is that, neither the mould, nor the coupling duct (3d) comprises any heating element configured for heating the mould and coupling duct (3d). that, Furthermore, the mould cavity is lined with a thermal insulating layer (1i) configured for slowing a cooling rate of the thermoplastic melt (12m) during the filling of the mould cavity (1 c). Similarly, the coupling duct (3d) can comprise an insulating layer configured for slowing a cooling rate of the thermoplastic melt (12m) as the thermoplastic melt flows through the coupling duct.

In a preferred embodiment, the apparatus of the present invention comprises a pretreatment extruder configured for carrying out at least one of degassing the thermoplastic polymer waste, blending the thermoplastic polymer waste with other thermoplastic polymer waste or with a colorant or a dye, and / or removing solid inclusions from the thermoplastic polymer waste.

### SHORT DESCRIPTION OF THE DRAWINGS

These and further aspects of the invention will be explained in greater detail by way of example and with reference to the accompanying drawings in which:
**Figure 1a** shows an embodiment of an apparatus according to the present invention.
**Figure 1b** illustrates the filling of the cavity of a mould with a process according to the present invention using the apparatus of Figure 1a
**Figure 1c** shows the cooling of the thermoplastic melt filling the mould.
**Figure 1d** illustrates demoulding of an article from the mould of the apparatus of Figure 1a.
**Figure 2a** shows a perspective view of a cut of a mould according to the present invention.
**Figures 2b & 2c** show (b) a perspective cut view, and (c) a perspective view of a vessel extracted from the mould of Figure 2a.
**Figures 3a to 3c** show three embodiments of moulds according to the present invention.
**Figuress 4a & 4b** show (a) the flow of polymer melt in a cavity of width (D) with progressive solidifying of the polymer as it is cooled from the walls of the mould and (b) the critical length (Lc) which limits the depth (L) the melt can flow in the cavity of width (D).
**Figures 5a & 5b** compare the value of the critical length between (a) a non-insulated mould, and (b) an insulated mould according to the present invention.
**Figure 6a** shows an embodiment of the present invention comprising a pretreatment of the waste polymer, with blending, degassing, and removal of inclusions, prior to filling the mould.
**Figure 6b** shows an alternative embodiment of the present invention comprising a pretreatment of the waste polymer, with blending, degassing, and removal of inclusions, prior to filling the mould.

### DETAILED DESCRIPTION OF THE INVENTION

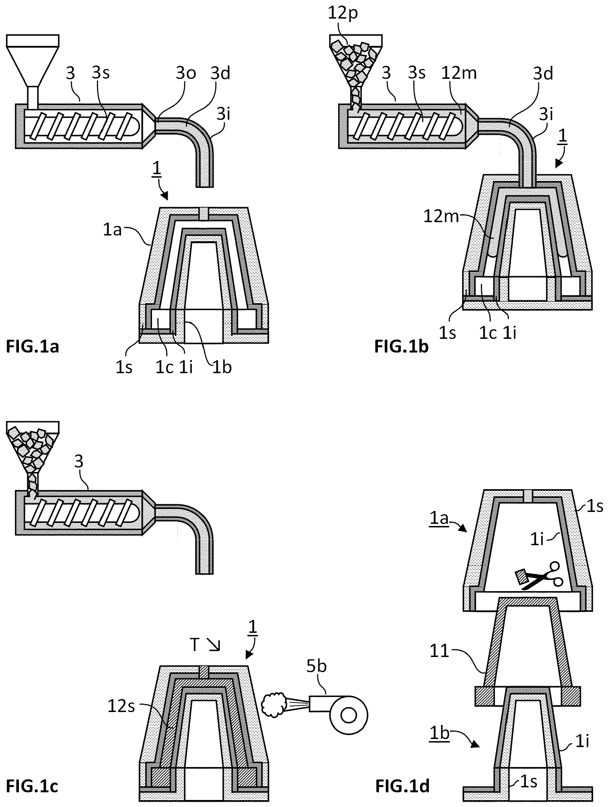

As illustrated in Figures 1a to 1d, the present invention concerns a process for producing an article (11) made of a thermoplastic polymer. The process requires an extruding apparatus (3), a mould (1) comprising a mould cavity (1c) defined by walls, and a thermoplastic polymer in the form of discrete solid particles (12p), preferably comprising, more preferably entirely made of thermoplastic polymer waste (12w) (cf. Figure 1a).

As shown in Figure 1b, the mould cavity (3c) is fluidly coupled to an extruding outlet (3o) of the extruding apparatus (3) through a coupling duct (3d). The solid particles (12p) of thermoplastic polymer are loaded into the extruding apparatus (3), where they are melted to form a thermoplastic melt (12m) and is transported along a screw (3s) of the extruding apparatus to the extruding outlet (3o), whence it flows through the coupling duct (3d) into the mould cavity (1c) to fill the mould cavity with thermoplastic melt (12m). The thermoplastic melt (12m) is allowed to cool in the cavity to form the article (11). Cooling can be forced, either by blowing a cold gas against the mould walls as shown in Figure 1c, or by flowing a cooling fluid in cooling channels (5c) arranged in or around the mould (1) as shown in Figures 3a and 3c. Once cooled to a sufficiently low temperature, the article (11) can be extracted from the mould (1) as shown in Figure 1d.

The gist of the present invention is that the mould (1) is not actively heated during filling of the mould cavity (1c) and, the walls defining the mould cavity comprise a thermal insulating layer (1i) configured to slow a cooling rate of the thermoplastic melt (12m) during the filling of the mould cavity (1c).

According to the present invention, after filling the mould cavity (1c) with the thermoplastic melt (12m), the mould (1) with the mould cavity (1c) filled with thermoplastic melt is uncoupled from the coupling duct (3d) to allow the thermoplastic melt (12m) to cool in the cavity to form the article (11). A new mould (1) with a mould cavity (1c) can be coupled to the coupling duct (3d) and the remaining steps of the process can be repeated, while the article (11) uncoupled mould (1) is cooling.

### THERMOPLASTIC POLYMER

The material used to manufacture the article is a thermoplastic material. The thermoplastic material is in the form of discrete solid particles. The process of the present invention is particularly suitable for use with recycled polymers. The thermoplastic polymer preferably comprises at least 50 wt.% of thermoplastic polymer waste (12w). It preferably comprises at least 90 wt.%, and more preferably consists of 100 wt.% thermoplastic polymer waste (12w). The thermoplastic polymer waste (12w) can be from industrial origin, and therefore be quite homogeneous. The process of the present invention is sufficiently tolerant to run with thermoplastic polymer waste (12w) of less controlled quality and therefore more inhomogeneous in composition. The quality of the grade of the thermoplastic polymer waste (12w) has a direct effect on the mechanical properties and reproducibility of the articles produced therewith.

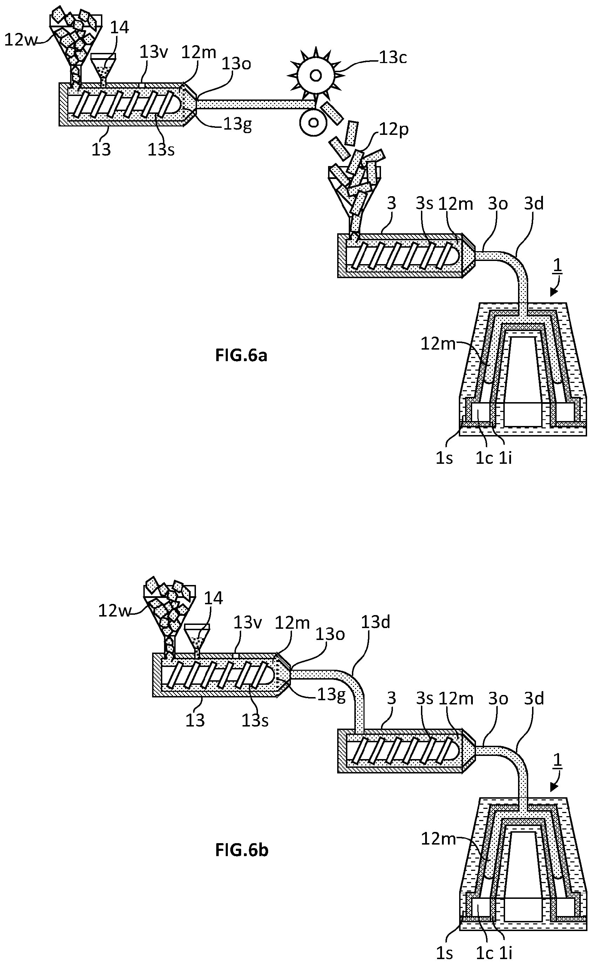

Depending on the article (11) produced and on the quality of the grade of the thermoplastic polymer waste (12w), the latter may require a pretreatment prior to being fed into the extruding apparatus (3). For example, as shown in Figures 6a and 6b, the thermoplastic polymer waste (12w) can be run in a pretreatment extruder (13) configured for forming the discrete solid particles (12p) of predefined dimensions as shown in Figure 6a or to be fed directly as a melt into the extruding apparatus (3) as shown in Figure 6b. In an alternative embodiment, the discrete solid particles (12p) formed with the pretreatment extruder (13) as shown in Figure 6a can be stored for a later use, rather than being fed directly to the extruding apparatus (3). The thermoplastic polymer waste can also be degassed in the pretreatment extruder (13) through a degassing vent (13v) allowing gas liberated upon melting the thermoplastic waste material. Preferably, the degassing vent is located in a section of the barrel of the pretreatment extruder (13) where the screw (13s) has a locally smaller diameter to create a pressure drop. During pretreatment, the thermoplastic polymer waste (12w) can be blended other thermoplastic polymer waste (12w), or with a colorant (14) or a dye. A colorant (14) or dye is preferred when using thermoplastic polymer waste (12w) of various origins which, once melted together yields a generally grey-brownish colour that is not the most appealing if the article walls are visible in use. A grid (13g) can be provided upstream of the outlet (13o) of the pretreatment extruder (13) to remove unmelted solid inclusions from the thermoplastic polymer waste (12w). Depending on the quality of the thermoplastic polymer waste (12w), the grid may have to be cleaned at regular intervals to prevent clogging.

As shown in Figure 6a, the polymer melt is extruded out of the outlet of the pretreatment extruder (13) in the form of a continuous strand that can be cut at a desired length at a cutting station (13c) to form the discrete solid particles (12p). In Figure 6a the discrete solid particles (12p) are fed in line to the extruding apparatus (3). Since the discrete solid particles (12p) are stable, they can be stored instead, and fed to the extruding apparatus (3) in a separate step. In the embodiment illustrated in Figure 6b, the pretreated polymer is fed directly as a melt to the extruding apparatus (3), saving the step of forming the discrete solid particles (12p). In this embodiment, the solid particles are fed to the extruding apparatus (3) through the pretreatment extruder (13).

For example, the thermoplastic polymer waste (12w) can comprise a first fraction of at least 70 wt.%, preferably at least 90 wt.% formed of a major polymer selected out of a list of three polymers consisting of polypropylene (PP), polyethylene (PE), or polyethylene terephthalate (PET) and comprises a second fraction, complementary with the first fraction, containing one or two polymers selected out of the list of three polymers, otherthan the major polymer. For example, the thermoplastic polymer can comprise 70 to 75 wt.% polyethylene (PE) as major polymer, 5 to 20 wt.% polypropylene (PP) and / or 5 to 20 wt.% polyethylene terephthalate (PET). Other, minor polymers can form the rest of the thermoplastic polymer waste (12w) summing up to 100 wt.%.

As an example, the thermoplastic polymer waste (12w) can comprise 75 wt.% polyethylene (PE), 5 wt.% polypropylene (PP), and 10 wt.% polyethylene terephthalate (PET).

### EXTRUSION APPARATUS (3) AND PRETREATMENT EXTRUDER (13)

Any extruder available on market can be used as the extrusion apparatus (3) and pretreatment extruder (13), provided it is appropriately dimensioned for the flowrates required for a particular application and can be heated at the required temperatures. The pretreatment extruder preferably comprises a degassing vent (13v) to allow degassing of thermoplastic polymer waste (12w) of undefined origin. The pressure developed by the extruder is not a priority, because the process of the present invention runs with very low pressure and is preferably run as free flowing casting at least until the mould cavity (3c) is almost completely filled, at which point, the pressure may raise slightly, but never very high.

### COUPLING DUCT (3d)

From a theoretical point of view, the use of a coupling duct (3d) to couple the mould (1) to the extruding outlet (3o) of the extruding apparatus (3) is not essential, as the thermoplastic melt (12m) could flow freely from the extruding outlet (3o) into the mould cavity (3c) by gravity. From a pragmatic point of view, however, the use of the coupling duct (3d) is required to control the flow towards a mould inlet which can be of small dimensions, to maintain the temperature high, and to protect the thermoplastic melt from direct contact with air.

The coupling duct (3d) can be a simple duct coupling the extruding outlet (3o) of the extruding apparatus (3) to the mould cavity (3c), as shown e.g., in Figures 6a and 6b. Like the mould, the coupling duct (3d) is not actively heated during filling of the mould cavity (1c). To maintain the thermoplastic melt (12m) temperature high, the coupling duct (3d) comprises an insulating layer (3i) illustrated in Figures 1a to 1c, configured to slow a cooling rate of the thermoplastic melt (12m) as the thermoplastic melt (12m) flows through the coupling duct (3d).

The coupling duct (3d) can be equipped with a valve to control the flowrate of the thermoplastic melt entering into the mould cavity (1c). The flowrate can also be controlled directly by the extruding apparatus (3) by controlling the rotation rate of the screw (3s).

### MOULD (1)

The mould (1) of the present invention is of the type comprising a closed cavity (1c) of fixed volume during processing. This excludes any compression moulding mould, which requires the volume of the cavity defined between two half moulds to decrease as the thermoplastic melt is being compressed. The mould (1) illustrated in Figures 1a to 1d, 2b, 2c, 3a to 3c, and 6 is formed of two elements (1a, 1b) that can be assembled to define the mould cavity (1c). It is clear that, depending on the geometrical complexity of the article (11) the mould (1) can comprise more than two elements.

### Critical length (Lc)

Preferably, the mould cavity comprises channels of high aspect ratio (L / D) of the length (L) of the channel to the width (D) of the channel measured between two opposite walls of the mould cavity (cf. Figures 4a, 4b, and 5a, 5b). A high aspect ratio is defined as an aspect ratio (L / D) which is larger than the critical aspect ratio (Lc / D) of the critical length (Lc) to the width (D). The critical length (Lc) is the maximum penetration depth of the thermoplastic melt (12m) into the channel of width (D). If the walls of the channel are heated to maintain the temperature of the thermoplastic melt above the melting temperature, the critical length Lc is infinite (excluding the cases of capillarity for very small values of D, which do not apply for a wall thickness of an article). If, as is the case in the present process, the walls of the channel are not heated, they are therefore colder than the temperature of the thermoplastic melt (12m). Heat is therefore extracted from the thermoplastic melt (12m) through the walls of the mould (1) and the thermoplastic starts solidifying starting at the interface between the thermoplastic and the wall (cf. Figure 4a). As shown in Figure 4b), as more heat is being extracted from the thermoplastic, the thickness of the solidified layer (12s) increases, decreasing the dimensions of the passage available to the thermoplastic melt (12m) to flow further, until the solidified layers of thermoplastic polymer (12s) of two opposed walls have grown to a thickness of about D / 2, they contact each other and obstruct completely the channel. At this point, the thermoplastic melt (12m) can no more flow through the channel, thus defining the critical length (Lc).

The critical length (Lc) depends on the process parameters, including the thermoplastic melt viscosity, which itself depends on the melt temperature, the wall temperature and thermal conductivity (k), the pressure and thus the flowrate of the thermoplastic melt through the channel, and the like. The critical length (Lc) can be increased, by reducing the heat flowrate and / or by increasing the melt flowrate. Reducing the heat flowrate from the thermoplastic melt (12m) towards the mould wall decreases the rate at which the solidified layer (12s) thickens allowing more time for the melt to flow over a given length (L). Increasing the melt flowrate allows the thermoplastic melt to flow over the given length (L) in less time.

In injection moulding, the mould walls are cold, and they are even often actively cooled. The temperature gradient between the thermoplastic melt and the mould walls is therefore high, driving the heat from the melt to the mould walls at a high heat flowrate. The thicknesses of the solidified layers (12s) therefore increase rapidly blocking the passage in a shorter time. On the other hand, the melt flowrate is increased by applying high pressures to the thermoplastic melt, thus requiring less time to flow over a certain length. The high pressure used in injection moulding allows achieving acceptable values of the critical length (Lc).

The mould in the process of the present invention is not heated during filling of the mould cavity (1c), so that the temperature gradient between the thermoplastic melt (12m) and the mould walls is quite high, and the solidified layer (12s) thickens rapidly. Unlike with injection moulding, however, the pressure in the process of the present invention remains low, preferably at or near atmospheric pressure during most of the filling time of the mould cavity. A solution must therefore be found to increase the value of the critical length (Lc) in the process of the present invention.

The solution proposed in the present invention is based on a reduction of the heat flowrate from the thermoplastic melt (12m) towards the mould wall. This is achieved, not by heating the mould walls, but by thermally insulating them.

### Mould (1) with insulating layer (1i)

The mould (1) of the present invention comprises a thermal insulating layer (1i) configured to slow a cooling rate of the thermoplastic melt (12m) during the filling of the mould cavity (1c). A thermal insulating layer is defined as a layer having a thermal conductivity (k) lower than 15 W / (m K) of certain grades of stainless steel (which is among the lowest values of metals). Preferably, the insulating material has a thermal conductivity (k) of not more than 5 W / (m K), preferably not more than 1 W / (m K), preferably not more than 0.8 W / (m K), more preferably not more than 0.5 W / (m K). The thermal conductivity (k) can be lower than 0.1 W / (m K) if polymers are used.

The thickness of the insulating layer (1i) depends on the desired heat flowrate. The skilled person knows how to best dimension the thickness of an insulating layer of given thermal conductivity (k) to yield a desired heat flowrate. For example, the thermal insulating layer (1i) has an average thickness comprised between 2 mm and 100 mm, preferably between 5 and 50 mm, more preferably between 10 and 20 mm. The thermal resistance (R = I / k) is the ratio of the insulating layer thickness (l) to the heat conductivity (k) and is expressed in [m² K / W]. For example, an insulating layer (1i) of thickness, t = 20 mm and of thermal conductivity, k = 0.5 W/ (m K) (e.g., HDPE) has a thermal resistance of 0.04 m² K / W. If polyurethane foam or a polystyrene foam is used instead as insulating layer (1i), the thermal conductivity is of the order of 0.03 W / (m K), yielding a thermal resistance of 0.67 m² K / W for the same thickness of t = 20 mm. Absent an insulating material, a steel mould can have a thermal conductivity ranging between about 10 and 50 W / (m K) depending on the steel grade. Taking a steel mould of thickness t = 20 mm and thermal conductivity of 15 W / (m K), yields a thermal resistance of 0.001 m² K / W, only.

The insulating layer (1i) can be formed of a thermosetting resin, preferably selected among epoxy, polyester, polyurethane. Alternatively, it can be made of a thermoplastic polymer of melting temperature at least 80°C higher than a temperature of the thermoplastic melt (12m) at the extruding outlet (3o). The thermoset or thermoplastic insulating layer (1i) can be a foam, increasing the insulating properties of the insulating layer. In another embodiment, the insulating later (1i) can be a fibre reinforced composite material with a thermoplastic or thermoset matrix as defined supra. The insulating layer can also be an inorganic material, such as a cementitious material, a clay based material, gypsum, and the like.

As shown in Figures 3a and 3b, the walls of the mould cavity can comprise a structural shell (1s) providing mechanical resistance to the mould (1). The thermal insulating layer (1i) is applied on a surface of the shell. It can be applied on a surface such that the thermoplastic melt (12m) contacts the insulating layer (1i) when filling the mould cavity (1c) as shown in Figure 3a. Alternatively, the insulating layer (1i) can be applied on a surface of the structural shell (1s) and never contacts the thermoplastic melt (12m), as shown in Figure 3b. This has the advantage that the surface finish of the cavity walls made of a metal shell can be very smooth, and it leaves a greater freedom of choice of the material of the insulating material, because it needs not have a smooth surface finish and does not require any particular resistance to erosion by the flow of thermoplastic melt (12m).

In an alternative embodiment illustrated in Figure 3c, the walls of the mould cavity (1c) can be made of a polymer material. Preferably, the polymer material is reinforced with fibres, preferably glass fibres, as they are temperature resistant and have good thermal insulating properties. In this embodiment, the insulating layer (1i) forms the entirety of the wall thickness. The polymer matrix is preferably a thermoset polymer, more preferably an epoxy or a polyester, selected depending on the temperature of the thermoplastic melt (12m).

Figures 5a and 5b compare the critical length (Lc) of a same thermoplastic melt (12m) at a same temperature at the extruding outlet (3o) of the extruding apparatus (3) flowing through a channel of same width (D). In Figure 5a, the cavity walls are made of steel and do not comprise any insulating layer. In Figure 5b, an insulating layer (1i) is applied on an outer surface of the cavity wall (as discussed supra with respect to Figure 3a, it could be applied on an inner surface of the cavity wall). With a lower thermal resistance of e.g., 0.001 m² K / W for a thickness of 20 mm and a thermal conductivity of 15 W / (m K) as in the example discussed supra, the thickness of the solidified layer (1s) grows quickly with the steel wall illustrated in Figure 5a, leading to the obstruction of the channel, when the opposed solidified layers (1s) reach one another. On the other hand. If a 20 mm thick polyurethane foam of thermal conductivity of 0.03 W/ (m K) is applied on top of a structural layer of steel, a higher thermal resistance of e.g., 0.67 m² K / Wand the thickness of the solidified layers (1s) is slower than in Figure 5a, giving the thermoplastic melt (12m) more time to flow over the whole length (L) of the channel before the channel becomes obstructed by the solidified layers (1s) meeting at the middle of the channel width (D). Without an insulating layer (1i) as shown in Figure 5a, the article (11) cannot be processed with a wall portion having a length (L) and a thickness (D), because the critical length (Lc) for this configuration is too short (i.e., Lc < L). The article (11) could be redesigned, or the mould (1) heated. The present invention offers a third option, providing an insulating layer (1i) to slow down the cooling rate of the thermoplastic melt (12m) and thus increase the critical length (Lc).

The solution of thermally insulating the walls of the mould cavity (1c) has the advantage of ensuring that the thermoplastic melt can fill the mould cavity (1c) completely, included channels of large aspect ratio (L / D), by maintaining the temperature of the thermoplastic melt (12m) above crystallisation temperature. It also has, however, that once the mould cavity is filled, the thermoplastic melt takes longer to cool and solidify / crystalise.

### Active cooling of the mould cavity walls

Cooling a thermoplastic melt (12m) in a mould cavity (1c) whose walls comprise an insulating layer (1i) can take a long time if no active cooling is applied. In one embodiment, the cooling of the thermoplastic melt (12m) can be accelerated by blowing cold air onto the outer surface of the mould (1) as illustrated in Figure 1c, showing a blower (5b) blowing air against the outer surface of the mould (1). In an alternative embodiment illustrated in Figures 3a and 3c, cooling of the thermoplastic melt (12m) can be accelerated with a cooling fluid circulating in cooling channels (5c) arranged in or around the mould (1). The cooling channels can be embedded in the insulating layer (1i) or in the structural shell (1s). Water cooing is preferred as it is readily available and does not require any particular precaution to use.

The cooling channels (5c) are preferably located as close as possible to the mould cavity (1c) and, in use, to the article solidifying therein.

The thermal resistance (R) of the mould cavity walls can be selected to optimise two apparently antagonistic criteria. On the one hand, the thermal resistance (R) should be sufficiently high to ensure that the critical length (Lc) of the system is sufficiently high for the geometry (e.g., L / D) of the article to be manufactured. On the other hand, the thermal resistance should be low enough to allow a quick enough cooling of the thermoplastic melt (12m) in the mould cavity (1c). It is clear that to optimise a combination of the above two criteria, it is preferred to vary the thermal resistance (R) of the mould cavity wall as a function of the geometry of the article (11) to be processed, such as to yield the critical length (Lc) required to fill the channel of the mould cavity (1c) having the highest aspect ratio (L / D) (i.e., Lc = L + m, wherein m is a safety margin used in the art, and m can be at least 2%, preferably at least 5%, more preferably at least 10%).

### Casting pressure and structural resistance of the mould (1)

The filling of the mould cavity (1c) with the thermoplastic melt (12m) proceeds at low pressure. It is preferred that the filling of the mould cavity proceeds at or close to atmospheric pressure, in a free falling casting of the thermoplastic melt into the cavity (1c), as shown in Figure 1b. Some pressure can build up in case the flowrate of the thermoplastic melt as it fills the mould lower than the flowrate of thermoplastic melt flowing through the extruding outlet (3o), but this pressure remains very low. Preferably, the pressure does not exceed 10 bar, more preferably is not more than 5 bar above atmospheric pressure. In general, it is preferred that no additional pressure other than gravity and a pressure applied by a rotation of the screw (3s) of the extruding apparatus (3) is applied during the filling of the cavity (1c) with the thermoplastic melt (12m).

Because of the low pressure applied during the filling of the mould cavity (1c) the mould cavity walls need not have high mechanical properties. This allows for thinner walls made of metal like steel or aluminium, or of fibre reinforced composites. Depending on the nature of the insulating layer (1i) (e.g., foam vs bulk) it can also contribute and in some cases suffice to the structural resistance of the mould. This is in contrast with injection moulding that requires very strong and expensive moulds. A low pressure during filling of the mould also allows the production of articles of larger dimensions. For example, the article (11) made of a thermoplastic polymer can weigh at least 3 kg, preferably at least 10kg, more preferably more than 100 kg or even more than 500 kg. For example, an article (11) made of m = 100 kg of polyethylene of density (*ρ*) of the order of 900 kg / m³, requires the casting of thermoplastic melt (12m) into a mould cavity of volume (V = m / *ρ*) of about 110 I.

The article (11) illustrated in Figures 1d and 2b & 2c is a plant pot for urban applications, having a height of about 1200 mm and a diameter at the opening of about 1000 mm. It is made of thermoplastic waste comprising at least 50 wt.% polyethylene and weighs about 300 kg, with walls having a thickness, D = 90 mm and a length L = L1 + L2 =1300 mm, yielding an aspect ratio (L / D) of about L / D = 1300 190= 14.4 (cf. Figure 2b). The temperature of the thermoplastic melt (12m) at the extruding outlet (3o) of the extruding apparatus was about 220°C. The mould was formed of a structural shell (1s) made of steel, whose inner surface was lined with a 10 mm-thick insulating layer (1i) made of glass fibre reinforced polyester of thermal conductivity, k = 0.3 W/ (m K), yielding a thermal resistance of R = t / k = 0.03 m² K / W (wherein t is the thickness of the insulating layer (1i).

### APPARATUS

The present invention also concerns an apparatus illustrated in Figure 1a for producing an article (11) made of a thermoplastic polymer, with the process described supra. The apparatus comprises a mould (1) comprising a mould cavity (1c), an extruding apparatus (3) In fluid communication with the mould cavity (1c), preferably via a coupling duct (3d).

As discussed supra, the mould (1) does not comprise any heating element configured for heating the mould and the walls defining the mould cavity comprise a thermal insulating layer (1i) configured for slowing a cooling rate of the thermoplastic melt (12m) during the filling of the mould cavity (1c).

In a preferred embodiment, the apparatus also comprises a pretreatment extruder (13) as shown in Figure 6a, configured for forming the discrete solid particles (12p) of thermoplastic polymer from thermoplastic polymer waste (12w). This allows the discrete solid particles (12p) to have a homogenous composition and size. The pretreatment extruder (13) can be provided with a degassing vent (13v) configured for degassing the thermoplastic polymer waste (12w). This reduces gas formation in the extruding apparatus (3) which could result in an article (11) having unwanted and uncontrolled porosity. The degassing vent (13v) preferably faces a region of the barrel of the pretreatment extruder (13) wherein the diameter of the screw (13v) is smaller than elsewhere, to create a depression in that region of the barrel.

In an alternative embodiment, illustrated in Figure 6b, the pretreatment extruder (13) is coupled to an inlet of the extruding apparatus (3) by a duct (13d). Like the coupling duct (3d) between the extruding apparatus (3) and the mould inlet discussed supra, the duct (13d) is not essential, as the thermoplastic melt (12m) could flow freely from the outlet (13o) of the pretreatment extruder (13 )into the inlet of the extruding apparatus (3) by gravity. From a pragmatic point of view, however, the use of the duct (13d) is required to protect the thermoplastic melt from direct contact with air.

The duct (13d) can be a simple duct coupling the the outlet (13o) of the pretreatment extruder (13) to the extruding apparatus (3), as shown in Figure 6b. Like the mould and the coupling duct (3d), duct (13d) is not actively heated during transfer of thermoplastic melt (12m) from the pretreatment extruder (13) to the extruding apparatus (3). To maintain the thermoplastic melt (12m) temperature high, the duct (13d) preferably comprises an insulating layer (not shown) configured to slow a cooling rate of the thermoplastic melt (12m) as the thermoplastic melt (12m) flows through the duct (13d).

The duct (13d) can be equipped with a valve to control the flowrate of the thermoplastic melt entering into the extruding apparatus (3). The flowrate can also be controlled directly by the pretreatment extruder (13) by controlling the rotation rate of the screw (13s).

As shown in Figures 6a and 6b, the pretreatment extruder (13) can be equipped with a second or further feeding hoppers to feed into the pretreatment extruder (13) and blend the thermoplastic polymer waste (12w) with other thermoplastic polymer waste (12w) or with a colorant (14) or a dye. The use of a colorant (14) or a dye enhances the homogeneity of the colour of the article (11) and preferably gives a more aesthetic aspect to the article (14) produced from thermoplastic waste of different or uncontrolled origins.

As shown in Figures 6a and 6b, the pretreatment extruder (13) can be equipped with a grid (13g) configured for removing solid inclusions from the thermoplastic polymer waste (12w). The grid (13g) acts as a filter preventing solid particles to reach the outlet (13o) of the pretreatment extruder (13).

### CONCLUDING REMARKS

The apparatus and process of the present invention are particularly suitable for producing articles (11) from thermoplastic waste of various origins. Articles (11) of large dimensions with walls of relatively high D / L aspect ratios can be produced in a highly cost-effective way. No active heating of the mould (1) is required for the insulating layer (1i) slows down the cooling of the thermoplastic melt (12m) as it flows into and fills the cavity (1c). The slower cooling has multiple advantages. First and as discussed supra, it increases the critical length (Lc) of a particular mould / thermoplastic melt system, thus allowing the production of articles with slender walls with higher lengths (L) and lower thicknesses (D). Second, a slow cooling allows working at low pressures, preferably at or around atmospheric pressure. This requires cheaper extruding apparatuses (3) and cheaper moulds (1) which must not be designed to resist high pressures. A strong mould made of steel required for injection moulding can be replaced by a metal mould with thinner walls or even by a composite mould. Low pressures during casting also allows moulds of larger dimensions to be used.

Third, it was observed that articles (11) with very smooth surfaces were obtained. Without wishing to be bound by any theory, it is believed that this is due to the fact that the thermoplastic melt (12m) does not instantly freeze in contact with a cold wall, but instead remains liquid for a sufficient time to match the surface smoothness of the mould walls. Similarly, and probably for the same reasons, it was observed that the surface of the article (11) reproduced small details such as embossed patterns, lettering, and the like.

| **REF** | **DESCRIPTION** |
|---|---|
| 1 | Mould |
| 1a | First mould part |
| 1b | Second mould part |
| 1c | Mould cavity |
| 1i | Mould insulating layer |
| 1s | Mould structural shell |
| 3 | Extruding apparatus |
| 3d | Coupling duct |
| 3i | Insulating layer of the coupling duct |
| 3o | Extruding apparatus outlet |
| 3s | Extruding apparatus screw |
| 5b | Blower for cooling the thermoplastic melt |
| 5c | Channel for cooling fluid. |
| 11 | Article |
| 12m | Thermoplastic melt |
| 12p | Thermoplastic polymer in the form of discrete solid particles |
| 12s | Solid polymer |
| 12w | Thermoplastic polymer waste |
| 13 | Pretreatment extruder |
| 13c | Cutting station |
| 13g | Pretreatment extruder grid |
| 13o | Pretreatment extruder outlet |
| 13s | Pretreatment extruder screw |
| 13v | Vent of the pretreatment extruder |
| 14 | Colorant |
| D | Channel width |
| L | Channel length |
| L1, L2 | Wall lengths in the article of Figure 2b, with L = L1 + L2 |
| Lc | Critical length of thermoplastic melt in the channel |
| m | Safety margin in Eq. Lc = L + m |

## Claims

1. Process for producing an article (11) made of a thermoplastic polymer, comprising,
• providing,
∘ a thermoplastic polymer in the form of discrete solid particles (12p),
∘ a mould (1) comprising a mould cavity (1c) defined by walls,
∘ an extruding apparatus (3),
• fluidly coupling an extruding outlet (3o) of the extruding apparatus (3) to the mould cavity (3c) through a coupling duct (3d),
• feeding the solid particles (12p) of thermoplastic polymer into the extruding apparatus (3), where they are melted to form a thermoplastic melt (12m) and is transported along a screw (3s) of the extruding apparatus to the extruding outlet (3o),
• filling the mould cavity (1c) with the thermoplastic melt (12m) fed out of the extruding outlet (3o),
• allowing the thermoplastic melt (12m) to cool in the cavity to form the article (11),
• extracting the article (11) from the mould (1),
**Characterized in that**, the mould (1) is not actively heated during filling of the mould cavity (1c) and **in that**, the walls defining the mould cavity comprise a thermal insulating layer (1i) configured for slowing a cooling rate of the thermoplastic melt (12m) during the filling of the mould cavity (1c) and **in that**, after filling the mould cavity (1c) with the thermoplastic melt (12m), the mould (1) with the mould cavity (1c) filled with the thermoplastic melt is uncoupled from the coupling duct (3d) to allow the thermoplastic melt (12m) to cool in the cavity to form the article (11), and a new mould (3) with a mould cavity (3c) is coupled to the coupling duct (3d) and the foregoing remaining steps are repeated.

2. Process according to claim 1, wherein the thermoplastic polymer (12p) in the form of discrete solid particles comprises at least 50 wt.%, preferably at least 90 wt.%, more preferably 100 wt.% of thermoplastic polymer waste (12w).

3. Process according to claim 2, wherein the thermoplastic polymer waste (12w) comprises a first fraction of at least 70 wt.%, preferably at least 90 wt.% is formed of a major polymer selected out of a list of three polymers consisting of polypropylene (PP), polyethylene (PE), or polyethylene terephthalate (PET) and comprises a second fraction, complementary with the first fraction, containing one or two polymers selected out of the list of three polymers, other than the major polymer.

4. Process according to claim 2 or 3 wherein the thermoplastic polymer waste (12w) is pretreated prior to feeding to the extruding apparatus (3), by running the recycled polymer waste in a pretreatment extruder (13) configured for carrying out at least one of degassing the thermoplastic polymer waste (12w), blending the thermoplastic polymer waste (12w) with other thermoplastic polymer waste (12w) or with a colorant (14) or a dye, and / or removing solid inclusions from the thermoplastic polymer waste (12w).

5. Process according to anyone of the preceding claims, wherein the coupling duct (3d) is not actively heated during filling of the mould cavity (1c) and wherein the coupling duct (3d) comprises an insulating layer (3i) configured for slowing a cooling rate of the thermoplastic melt (12m) as the thermoplastic melt (12m) flows through the coupling duct (3d).

6. Process according to anyone of the preceding claims, wherein the walls of the mould cavity, either
• comprise a structural shell (1s) providing mechanical resistance to the mould (1).and wherein the thermal insulating layer (1i) is applied on a surface of the shell, or
• are made of a polymer material, preferably a fibre reinforced composite material, which forms the insulating layer (1i).

7. Process according to anyone of the preceding claims, wherein the thermal insulating layer (1i) has a thermal conductivity (k) of not more than 1 W / (m K), preferably not more than 0.8 W / (m K), more preferably not more than 0.5 W / (m K), and is preferably formed of a material selected among,
• a thermosetting resin, preferably selected among epoxy, polyester, polyurethane, or
• a thermoplastic polymer of melting temperature at least 80°C higher than a temperature of the thermoplastic melt (12m) at the extruding outlet (3o), or
• a fibre reinforce composite with a thermoplastic or thermoset matrix as defined supra, or
• a cementitious material, a clay-based material, gypsum.

8. Process according to anyone of the preceding claims, wherein the mould cavity (1c) comprises a channel of length (L) and width (D), and wherein the insulating layer (1i) has a thermal resistance (R) such that a critical length (Lc) of the thermoplastic melt (12m) in the channel is at least equal to the length (L) of the channel added by a safety margin (m) of at least 2% (i.e., Lc = L + m).

9. Process according to anyone of the preceding claims, wherein the thermal insulating layer (1i) has an average thickness comprised between 2 mm and 100 mm, preferably between 5 and 50 mm, more preferably between 10 and 20 mm.

10. Process according to anyone of the preceding claims, wherein no additional pressure other than gravity and a pressure applied by a rotation of the screw (3s) of the extruding apparatus (3) is applied during the filling of the cavity (1c) with the thermoplastic melt (12m).

11. Process according to anyone of the preceding claims, wherein cooling of the thermoplastic melt (12m) is accelerated with a cooling fluid, including cool air blown with a blower (5b) onto surfaces of the mould (1) or a cooling liquid circulating in cooling channels (5c) arranged in or around the mould (1).

12. Process according to anyone of the preceding claims, wherein the article (11) made of a thermoplastic polymer weighs at least 3 kg, preferably at least 10kg, more preferably more than 100 kg.

13. Apparatus for producing an article (11) made of a thermoplastic polymer, with a process according to anyone of the preceding claims, comprising,
• a mould (1) comprising walls defining a mould cavity (1c),
• an extruding apparatus (3) comprising an inlet for introducing the thermoplastic polymer into a chamber provided with heating elements and containing at least one rotating screw (3s) configured for conveying molten polymer from the inlet to an extruding outlet (3o), wherein the extruding apparatus (3) is in fluid communication with the mould cavity (1c),
**characterized in that**, the mould (1) and the coupling duct (3d) do not comprise any heating element configured for heating the mould and coupling duct (3d), **in that,** the mould cavity is lined with a thermal insulating layer (1i) configured for slowing a cooling rate of the thermoplastic melt (12m) during the filling of the mould cavity (1c) and **in that,** the coupling duct (3d) comprises an insulating layer (3i) configured for slowing a cooling rate of the thermoplastic melt (12m) as the thermoplastic melt (12m) flows through the coupling duct (3d).

14. Apparatus according to claim 13, comprising a pretreatment extruder (13) configured for carrying out at least one of degassing the thermoplastic polymer waste (12w), blending the thermoplastic polymer waste (12w) with other thermoplastic polymer waste or with a colorant (14) or a dye, and / or removing solid inclusions from the thermoplastic polymer waste (12w).
